# EUROPEAN PATENT SPECIFICATION

(11) **EP 3 894 050 B1**
(45) Date of publication and mention of the grant of the patent: **19.06.2024**
(21) Application number: 18942875.8
(22) Date of filing: 14.12.2018
(51) Int. Cl.: B01D 61/02, B01D 61/14, B01D 63/06, C02F 1/44

(54) **ARRANGEMENT IN CROSS-FLOW MEMBRANE SEPARATION UNIT**
ANORDNUNG IN EINER QUERSTROMMEMBRANTRENNEINHEIT
AGENCEMENT DANS UNE UNITÉ DE SÉPARATION À MEMBRANE À ÉCOULEMENT TRANSVERSAL

(43) Date of publication of application: 20.10.2021
(73) Proprietor: EMP-Innovations OY, 05810 Hyvinkää (FI)
(72) Inventor: AULANKO, Esko, 04230 Kerava (FI); MUSTALAHTI, Jorma, 05620 Hyvinkää (FI)
(74) Representative: Salomäki, Juha Kari Ensio
(86) International application number: PCT/FI2018/050930
(87) International publication number: WO 2020/120829

(56) References cited:
- EP-A1- 1 752 207
- DE-A1-102011 015 483
- DE-A1-102011 015 483
- GB-A- 2 383 001
- GB-A- 2 383 001
- US-A- 4 702 842
- US-A- 4 702 842
- US-A1- 2009 314 695
- US-A1- 2009 314 695

## Description

The object of the invention is an arrangement according to claim 1 in a cross-flow membrane separation unit.

Large areas in the world suffer from poor or non-usable drinking water. Also, in many areas of the world tap water is not suitable for drinking or cooking. The reason is that the water contains too high levels of impurities, such as contaminants, microbes, salt, iron, heavy metals, fluoride, arsenic, carcinogens, and other chemicals and substances that are unwanted and/or detrimental to health. The most problematic areas are densely populated areas, such as China, India, Indonesia, Africa but the problem is very common also in Southern Europe, America and in the rest of Asia. Growing world population, increasing urbanization, pollution and global warming make the problem even bigger.

Main reasons for the poor or non-potable tap water are contaminated water supplies, overloaded and old municipal water piping systems and infrastructure and the ever-increasing demand. To compensate the contaminants of the water supply and old overloaded pipe systems, municipal waterworks must overdose chlorine or chloramines to keep microbial quality acceptable, but this kind of overdosing creates toxic and/or carcinogenic substances in the water.

Alternatives for the consumers to cope with the problem are to use bottled water or to install domestic, residential-specific small water purification devices to purify tap water.

Bottled water is costly and also ecologically harmful, because it generates huge amounts of plastic waste and transport emissions. In addition, it is heavy to carry around and it needs a lot of room in shops and stores.

Small domestic water purification devices offer a better alternative. Most often they are low cost Point-Of-Use (POU) systems, which have limited capacity and purify mainly drinking and cooking water. Typically, they are "under-the-sink" or "counter-top" systems producing 30 - 300 litres purified water daily. However, these small water purification devices also have disadvantages, e.g. investment costs and maintenance costs. Depending on the technology, they also may not remove all contaminants and they may have poor water economy. This means that they waste too much water. In addition, they may need electric power and thus they consume energy.

Usually one purification device may comprise more than one purification method. For instance, in addition to the RO stage, RO systems almost always comprise also sediment filters and activated carbon filters.

Typical purification methods in POU systems for domestic tap water are a filtration, activated carbon filtering, UV disinfection and reverse osmosis (RO) systems.

The filtration method is effective for suspended solids with particle size above 1-5 µm but it is ineffective against dissolved substances, toxins and microbes.

Activated carbon filtering is effective for suspended solids with particle size above 5 pm, removing big organic molecules and gases, and it improves taste and smell. However, it is not effective to dissolved substances and microbes and it does not remove most toxins.

UV disinfection is effective for microbes, but it does not remove any suspended or dissolved solids or any toxins or carcinogens. In addition, it needs electric power, the light sources used have a limited lifetime and they contain mercury.

Reverse osmosis (RO) systems are effective for suspended and dissolved solids, microbes, toxins and carcinogens. However, low cost RO systems of prior art suffer from poor water economy. Typically, about 500 litres of water is needed to produce 100 litres of purified water. More effective RO systems need electric power and are more expensive. In spite of their disadvantages, RO systems are the most common POU systems, as they are most effective, removing practically all the contaminants from the water.

However, increasing volume of domestic POU systems using RO methods according to the prior art solutions can be a future threat to the whole mankind because the water consumption would tremendously grow. The recovery rate of prior art POU systems is only 10-30%, which means that 70-90% of the used tap water is wasted.

The operation of a membrane filter, which can be also called a membrane separator, can be described in a simplified manner as follows: The permeable membrane to be used, which possesses certain properties, allows a substance to be purified, e.g. water, to pass through it and retains other materials. In practice, the separation of membrane filters is not perfect, in which case the result of the separation is the permeate that has passed through the membrane and the concentrate, or corresponding, obtained from the material to be filtered. Often the permeate is the intended product, e.g. when purifying water, but membrane separation can be used for concentrating the sought material, e.g. when recovering process chemicals or when concentrating solutions.

A generally used membrane filtration method for liquids is so-called cross flow filtering. Cross flow filtering is in use in many different types of membrane filtering methods, e.g. in reverse osmosis filtration, nanofiltration, ultrafiltration and microfiltration. In cross flow filtering the material to be purified is brought to flow in the direction of the surface of the filtering membrane in which case, although some of the material filters through the membrane, the material to be purified rinses the surface of the membrane and in this way keeps the membrane permeable while preventing clogging or a large local concentration on the surface of the membrane. The driving force in membrane filtration is a pressure difference across the membrane. Energy is also needed, apart from overcoming the resistance caused by the membrane, for moving and conducting the liquids in the different phases of the process as well as for raising the pressure of the liquid to the operating pressure needed.

Membrane filter devices and their components are generally available for various purposes. Membrane filter plants and devices are fabricated from commercially available components and are based on generally known techniques. For example, reverse osmosis filters are commercially available for various applications and suitably also for the treatment of various solutions and for the separation of many types of substances, and, *inter alia*, filters for salt removal can be optimized and also the salt content ratio of the water to be treated can be selected. Document GB2383001 disclosed an arrangement in a crossflow membrane separation unit, as disclosed in the preamble of claim 1.

The aim of this invention is to achieve an effective, inexpensive, reliable, safe and well-functioning method and an arrangement, shorter a filtering solution in a membrane filtration. More particularly the invention aims for reverse osmosis filtration solutions, nanofiltration solutions, ultrafiltration solutions and microfiltration solutions and especially the type of solutions that are suitable for use in the reverse osmosis enrichment or reverse osmosis purification of aqueous solutions. Further, one aim is to achieve a filtering solution in a membrane filtration by which water consumption can be reduced as close as possible to minimum.

The arrangement in a cross-flow membrane separation unit according to the invention is characterized by what is presented in the characterization part of claim 1. Other embodiments of the invention are characterized by what is presented in the other claims.

An aspect of the invention is to provide an arrangement in cross-flow membrane separation unit, which is comprising a membrane element and a pressure keeping structure enclosing the membrane element, into which enclosure a pressurized input substance is led, out of which enclosure are outputs for the separated parts of the input substance, where the input substance is led into an upstream section of the membrane element, part of the input substance is arranged permeate to the membrane as a permeate, and the unpermeated part, a concentrate, is arranged to exit from the downstream section of the membrane element. The mass flow into the upstream section of the membrane element is greater than the mass flow into the enclosure.

An important advantage to be achieved with the invention is a high coefficient of efficiency for membrane filtration. In particular the favorable, at least momentary, avoidance of pressure losses to be achieved with an implementation of the invention assists in reaching a high coefficient of efficiency. Also, other advantages can be achieved with the invention.

This invention is related to the invention described in the European patent application EP2723477 that describes basic operations of membrane filtration with re-circulated concentrated water. The solution of the pending application differs from the solution of said European patent application in that the pending application presents a new and improved arrangement of membrane filtration where concentrated water is re-circulated totally inside the enclosure of the membrane unit.

The substance to be filtered, for example pressurized tab water is later called as input substance. The clean substance that has passed through the membrane filter is later called as permeated substance or permeate. The part of the input substance, which is not passing through the membrane filter is later called as unpermeated substance or concentrate. The membrane filtration unit comprises an enclosure or pressure keeping structure, which is closed and sealed with a cap or by another way. The enclosure cap or the enclosure itself comprises one inlet for the input substance, one outlet for the permeated substance and second outlet for the unpermeated substance or concentrate that is led, for instance, to the drain.

The basic idea of this innovation is that a portion of the concentrate is arranged to circulate back totally inside the enclosure to the upstream section of the membrane element to be mixed with the pressurized input substance and where the energy for maintaining the circulation is taken from the kinetic and pressure energy of the pressurized input substance. With this procedure the unpermeated concentrate is returned to be re-filtered. Benefit is gained from the arrangement at least in two ways: firstly, the yield can be improved; and secondly, the concentrate coming for re-filtering is pre-pressurized, in which case costs are not incurred in this respect by raising the pressure. Preferably both the substance flow permeating the filter membrane and the substance flow not permeating the filter membrane can be maintained with the input substance flow coming from a pressurized substance source. By suitably shaping and dimensioning the input substance flow infeed and the unpermeated concentrate circulation, very low energy consumption in maintaining the substance flow in membrane element can be achieved.

In addition, keeping the concentrate circulation totally inside the enclosure, the apparatus is very simple, compact and inexpensive. With the invention, both large and small plants can be implemented energy-efficiently without pressure exchangers or corresponding energy recovery devices being needed. With the solution also a rather high yield can be achieved, which is important e.g. in water purification, in which pretreatment and/or the untreated water has a significant proportion in the total costs.

The invention is particularly advantageous in water purification applications, e.g. in desalination, in making process water, boiler water or plant water, in preparing irrigation water or drinking water, and even for the purification of waste water. The invention is also suited to the enrichment of dissolved substances, e.g. in the food industry or in the mining industry.

The primary conceived use of the invention is the application of it in reverse osmosis separation. Many effects or technical solutions are very similar in other membrane separation techniques. Within the scope of applicability, the inventive solutions can therefore be extended to be used in other membrane separation procedures also, although the description and explanations of the technical solutions are presented here in this context most often in a reverse osmosis device environment.

In the following the invention will be described in more detail by the aid of examples of its embodiments with reference to the attached simplified drawings, wherein
- Fig. 1: presents as a diagram a simplified apparatus applicable to the invention,
- Fig. 2a: presents an application of the invention,
- Fig. 2b: presents a solution where the concentrate circulation is arranged in the first end of the membrane element,
- Fig. 3: present a second embodiment of the invention,
- Fig. 4: presents a solution where the concentrate circulation is arranged in an intermediate flange,
- Fig. 5: presents a solution where the concentrate circulation is arranged in a cap of the enclosure, and
- Fig. 6: presents a third embodiment of the invention.

Note, that for clarity reason, some of the sectioned drawing lines (according to drawing codes) from the substance channels drawings are missing.

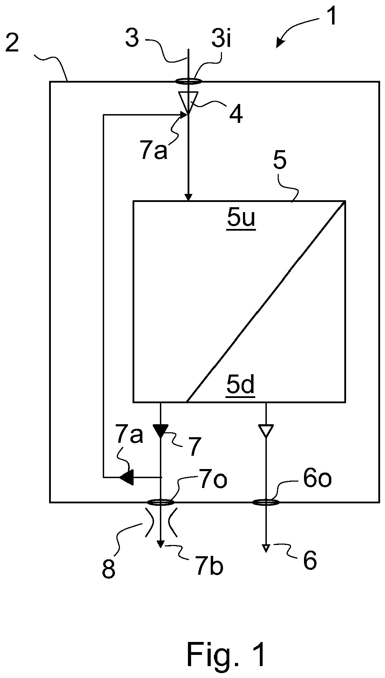

Fig. 1 diagrammatically presents a simplified apparatus applicable in the invention. A cross-flow membrane separation unit 1 has an enclosure 2, which comprises input substance inlet 3i for an input substance 3, one or more ejector pumps 4, a membrane element 5 with an upstream section 5u and a downstream section 5d, a permeate outlet 6o for a permeate 6 and an unpermeated concentrate outlet 7o for the portion of an unpermeated concentrate 7 to be led to the drain.

The enclosure 2 is, in practice, a vessel that holds pressure, inside which enclosure 2 the membrane element 5, e.g. a reverse osmosis filter membrane, is arranged. The input substance 3, e.g. pressurized tab water to be purified is fed through each ejector pump 4 to the upstream section 5u of the membrane element 5. Part of the input substance 3 permeates the membrane and is led out as the permeate 6 from the permeate outlet 6o. The unpermeated part exits from the downstream section 5d of the membrane element 5 as an unpermeated concentrate 7.

The first portion of the unpermeated concentrate 7, the portion of the concentrate to be circulated, later also circulatory concentrate 7a, is circulated totally inside the enclosure 2 back to the ejector pump 4, where the creating low pressure in the input substance 3 flow sucks the circulatory concentrate 7a to the input substance flow towards the membrane element 5 and thus circulating and re-filtering the circulatory concentrate 7a.

The second portion of the concentrate 7, the drain concentrate 7b, is led out from the enclosure 2 to the drain through the concentrate outlet 7o. The drain concentrate 7b flow magnitude can be adjusted with the choke element 8.

The circulatory concentrate 7a is arranged to circulate back totally inside the enclosure 2 to the upstream section 5u of the membrane element 5 to be mixed with the pressurized input substance 3 and where the energy for maintaining the circulation is taken from the kinetic and pressure energy of the pressurized input substance 3.

Because of the re-circulation of the circulatory concentrate 7a the mass flow into the upstream section 5u of the membrane element 5 is greater than the mass flow into the enclosure 2 in the input substance inlet 3i.

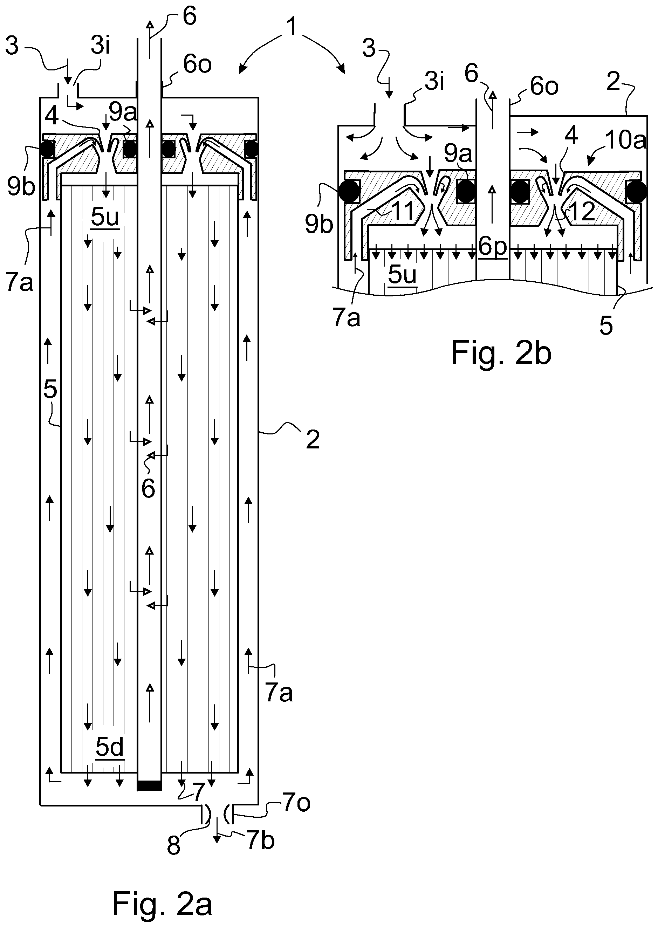

Fig. 2a presents an application of the invention in a simplified and cross-sectioned side view, and Fig. 2b presents a solution where the circulation of the circulatory concentrate 7a is arranged in the first end of the membrane element 5.

The cross-flow membrane separation unit 1 comprises the input substance inlet 3i for incoming input substance 3, the concentrate outlet 7o with the choke element 8 for the drain concentrate 7b to be led to the drain, the permeate outlet 6o for the permeate 6, the membrane element 5 and an ejector pump element 10a preferably comprising one or more ejector pumps 4. The first end of the enclosure 2 may be closed by a separable cap or it can be permanently closed e.g. by welding.

In this embodiment of the invention the ejector pump element 10a is attached, e.g. by adhesive, to the upstream section 5u of the membrane element 5. The ejector pump element 10a comprises a seal 9a, e.g. an O-ring-seal, against a permeate channel 6p, which is arranged in the center of the membrane unit 5, to seal the mixed input substance 3 and circulatory concentrate 7a and to maintain the pressure of the substance inside the membrane unit 5. The ejector pump element 10a comprises also a seal 9b, e.g. an O-ring-seal, against to the inner surface of the enclosure 2 to keep the input substance 3 separated from the circulatory concentrate 7a.

The pressurized input substance 3 flows from the input substance inlet 3i into the enclosure 2 between the closed first end of the enclosure and the ejector pump element 10a. The input substance 3 is arranged to flow through each ejector pump 4 to a diffusor 12 that is arranged to reduce the pressure in the input substance flow thus creating low pressure into the ejector pump system. Thanks to the low pressure the input substance 3 flow sucks the circulatory concentrate 7a from the concentrate channel 11. The input substance 3 and circulatory concentrate 7a flow to the diffusor 12, where they are mixed together and led to the upstream section 5u of the membrane element 5. The mixed input substance 3 and circulatory concentrate 7a are later called also as a mixed substance.

The mixed substance flows from the upstream section 5u of the membrane element 5 to the downstream section 5d of the membrane element 5. During the flow, a part of the mixed substance permeates to the membrane as a permeate 6 and it is led inside the membrane roll to the permeate channel 6p, from where it flows out from the permeate outlet 6o as a clean permeate 6. The unpermeated part, the concentrate 7, exits from the downstream section 5d of the membrane element. The first portion of the concentrate 7, circulatory concentrate 7a, is led between the outer surface of the membrane element 5 and the inner surface of the enclosure 2 to the ejector pump element 10a to be re-circulated in the membrane element 5. The second portion of the concentrate 7, the drain concentrate 7b, is led to the drain through the concentrate outlet 7o. The drain concentrate 7b flow magnitude can be adjusted with the choke element 8.

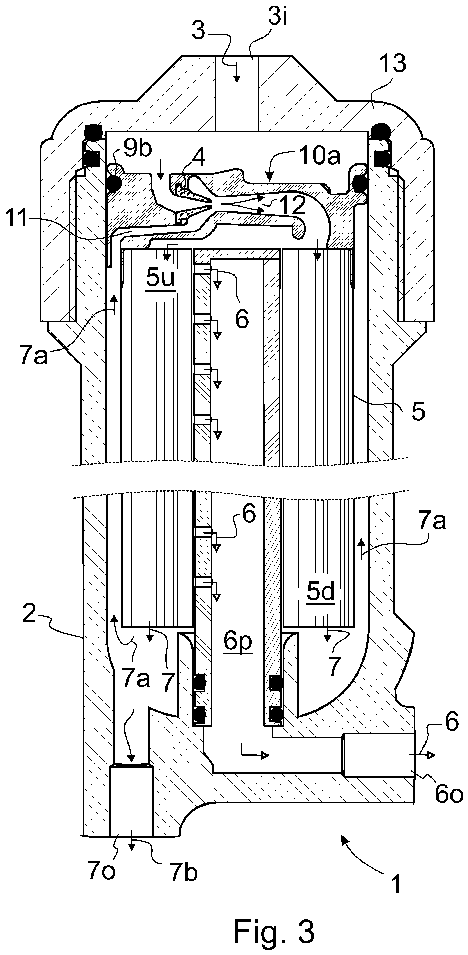

Fig. 3 presents a second embodiment of the invention. The enclosure 2 comprises an openable threaded cap 13 having an input substance inlet 3i. The permeate outlet 6o and concentrate outlet 7o are located at the second end of the enclosure 2. The ejector pump element 10a is attached to the upstream section 5u of the membrane element 5 as in the first embodiment. The ejector pump 4 mechanism is arranged perpendicularly compared to the ejector pump 4 in the first presented embodiment. This perpendicular ejector pump 4 arrangement provides more space to a nozzle and to the diffusor 12.

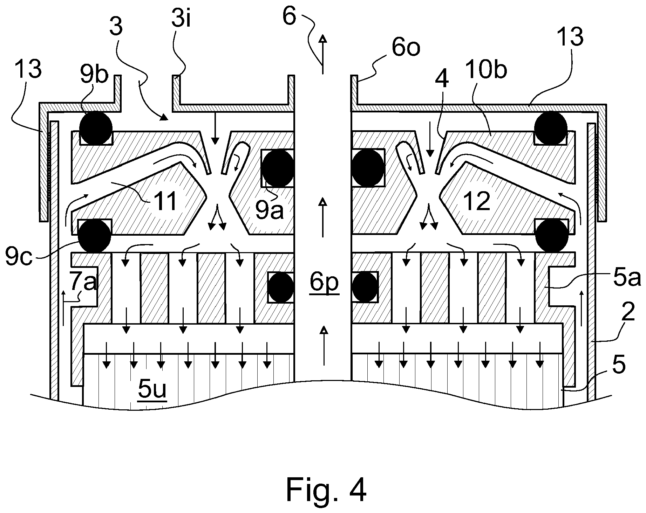

Fig. 4 presents a solution where the concentrate circulation is arranged in an intermediate flange. The ejector pump element 10b is an intermediate flange between the enclosure cap 13 and the membrane element 5. The membrane element 5 comprises an end cap 5a, which has open channels for the substance to flow inside the membrane element 5. The membrane element 5 end cap 5a also has a central hole with sealings for the permeate channel 6p.

When the enclosure cap 13 is rotated tightly closed, the ejector pump element 10b is set firmly between the enclosure cap 13 and the end cap 5a of the membrane element 5. The seal 9b arranges a space for the input substance 3 inside the enclosure 2 and also keeps the input substance 3 and circulatory concentrate 7a separated from each other. The seal 9c arranges a space for the mixed substance between the ejector pump element 10b and the end cap 5a of the membrane element 5 and also keeps the mixed substance and circulatory concentrate 7a separated from each other. The seal 9a keeps the input substance 3 and mixed substance separated from each other.

The circulatory concentrate 7a is arranged to flow between the outer surface of the membrane element 5 and the inner surface of the enclosure 2 from downstream section 5d of the membrane element 5 to the ejector pumps 4 of the ejector pump element 10b. The input substance 3 flows to the ejector pumps 4 to a diffusor 12 as is described above. The input substance 3 flow sucks the circulatory concentrate 7a from the concentrate channel 11. The input substance 3 and circulatory concentrate 7a flow to the diffusor 12, where they are mixed together, and led to the channels of the end cap 5a of the membrane element 5. The mixed substance flows from the upstream section 5u of the membrane element 5 to the downstream section 5d of the membrane element 5.

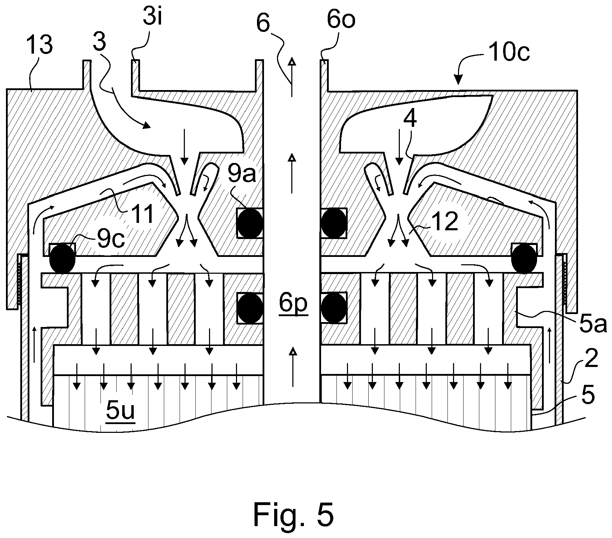

Fig. 5 presents a solution where the concentrate circulation is arranged in a cap of the enclosure. The ejector pump element 10c is integrated to the enclosure cap 13. The membrane element 5 comprises an end cap 5a, which has open channels for the substance to flow inside the membrane element 5. The membrane element 5 end cap 5a also has a central hole with sealings for the permeate channel 6p.

When the enclosure cap 13 is rotated tightly closed, the integrated ejector pump element 10c is set firmly upon the end cap 5a of the membrane element 5. The seal 9b arranges a space for the mixed substance between the ejector pump element 10c and the end cap 5a of the membrane element 5 and also keeps the mixed substance and circulatory concentrate 7a separated from each other. The seal 9a keeps the mixed substance inside the enclosure 2.

The circulatory concentrate 7a is arranged to flow between the outer surface of the membrane element 5 and the inner surface of the enclosure 2 from downstream section 5d of the membrane element 5 to the ejector pumps 4 of the ejector pump element 10c. The input substance 3 flows through the ejector pumps 4 to a diffusor 12. The input substance 3 flow sucks the circulatory concentrate 7a from the concentrate channel 11. The input substance 3 and circulatory concentrate 7a flow to the diffusor 12, where they are mixed together, and led to the channels of the end cap 5a of the membrane element 5. The mixed substance flows from the upstream section 5u of the membrane element 5 to the downstream section 5d of the membrane element 5.

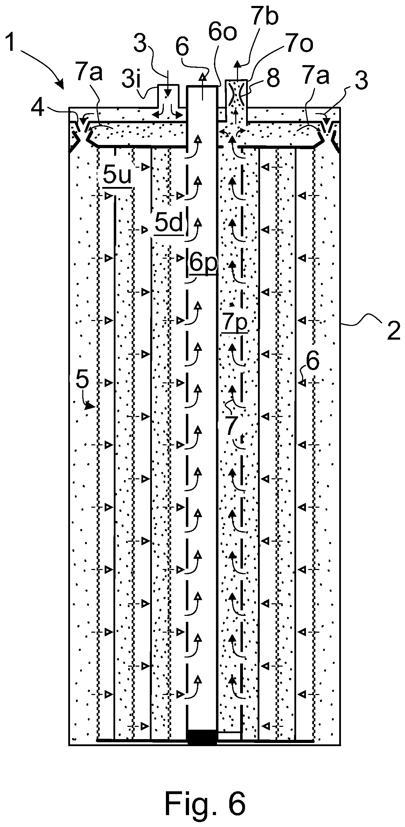

Fig. 6 presents a third embodiment of the cross-flow membrane separation unit in a simplified and cross-sectioned diagram figure. The input substance inlet 3i, the permeate outlet 6o and the concentrate outlet 7o are all at the same end of the enclosure 2. In this embodiment the upstream section 5u of the membrane element 5 is at the cylindrical outer periphery of the membrane element 5 and the downstream section 5d of the membrane element is at the cylindrical inner periphery of the membrane element 5 near the permeate channel 6p.

The input substance 3 is fed through the ejector pumps 4 with the circulatory concentrate 7a to between the inner surface of the enclosure 2 and the outer surface of the membrane element 5. This mixed substance is in contact to the outer surface of the membrane element 5 in the whole length of the membrane element 5. The permeate 6 is penetrating through the membrane layer to the "permeate pouch", where the permeate 6 is circulating substantially sprirally towards to the downstream section 5d of the membrane element 5 and finally to the permeate channel 6p from which the permeate 6 is led out from the permeate outlet 6o. The unpermeated concentrate 7 is also circulating substantially sprirally between the "permeate pouch" surfaces towards to the downstream section 5d of the membrane element 5 and finally to the discharge channel 7p. A portion of the concentrate 7, the circulatory concentrate 7a, is led to re-circulation to the membrane element 5 through the ejector pumps 4. Another portion of the concentrate 7, the drain concentrate 7b, is led to concentrate outlet 7o, where the drain concentrate 7b flow magnitude can be adjusted with the choke element 8.

All types of the cross-flow membrane separations units can be equipped with the presented ejector pump elements 10a, 10b or 10c. The presented ejector pump elements 10a, 10b and 10c each may comprise one or more ejector pumps 4. The cross-flow membrane separation unit according to the invention may utilize various types of separation methods, like for example micro-, ultra- or nanofiltering, or reverse osmosis. Also, the substance to be separated may be e.g. gas or liquid, like water containing contaminants.

It is obvious to the person skilled in the art that the invention is not limited to the examples described above, but that it may be varied within the scope of the claims presented below as well as of the description and the drawing presented. For example, the position of the input substance inlet, permeate outlet and concentrate outlet may vary in any combination of positions, which also has effect to ejector pump element construction. The most important technical effect of this invention is, however, that a portion of the unpermeated concentrate, the circulatory concentrate, is circulated back to the membrane element totally inside the enclosure, where the membrane element is located.

## Claims

1. Arrangement in a cross-flow membrane separation unit (1), comprising a membrane element (5) and a pressure keeping structure enclosing the membrane element (5), into which enclosure (2) a pressurized input substance (3) is led, out of which enclosure (2) are outputs for the separated parts of the input substance (3), where the input substance (3) is led into an upstream section (5u) of the membrane element (5), a part of the input substance (3) is arranged to permeate in the membrane as a permeate (6), and the unpermeated part, a concentrate (7), is arranged to exit from the downstream section (5d) of the membrane element (5), and a portion of the concentrate (7) is arranged to circulate back as a circulatory concentrate (7a) inside the enclosure (2) to the upstream section (5u) of the membrane element (5) to be mixed with the pressurized input substance (3), and where the mass flow into the upstream section (5u) of the membrane element (5) is greater than the mass flow into the enclosure (2), and that the separation unit (1) comprises an ejector pump element (10a, 10b, 10c) with one or more ejector pumps (4), **characterized in that** the separation unit (1) comprises a seal (9b, 9c) that is arranged to separate the input substance (3) that is fed to the upstream section (5u) of the membrane element (5) and channels of the circulatory concentrate (7a) from each other.

2. Arrangement in a cross-flow membrane separation unit according to claim 1, **characterized in that** a portion of the concentrate (7) released from the downstream section (5d) of the membrane element (5) is arranged to be led between the outer surface of the membrane element (5) and the inner surface of the enclosure (2) to circulate back to the membrane element (5) upstream section (5u) .

3. Arrangement in a cross-flow membrane separation unit according to claim 1, **characterized in that** a portion of the concentrate (7), which is released from the downstream section (5d) of the membrane element (5) is arranged to be led via a discharge channel (7p) to circulate back to the membrane element (5) upstream section (5u).

4. Arrangement in a cross-flow membrane separation unit according to any of preceding claims 1 - 3, **characterized in that** the ejector pump element (10a, 10b, 10c), which is arranged to maintain the circulation, comprises one or more ejector pumps (4) each comprising a nozzle for the input substance (3), a channel (11) for the circulatory concentrate (7a) and a diffusor (12) for mixing the substances (3, 7a).

5. Arrangement in a cross-flow membrane separation unit according to claim 4, **characterized in that** the ejector pump element (10a) is attached to the end of the membrane element (5).

6. Arrangement in a cross-flow membrane separation unit according to any of preceding claims 1 - 5, **characterized in that** the ejector pump element (10a) comprises a seal (9b) between the ejector pump element (10a) and the enclosure (2) inner surface.

7. Arrangement in a cross-flow membrane separation unit according to any of preceding claims 1 - 4, **characterized in that** the ejector pump element (10c) is integrated into the cap (13) of the enclosure (2) or into the end of the enclosure (2).

8. Arrangement in a cross-flow membrane separation unit according to claim 7, **characterized in that** the ejector pump element (10c) comprises a seal (9c) between the ejector pump element (10c) and an end cap (5a) of the membrane element (5), and that the seal (9c) is arranged to separate the channels for the circulatory concentrate (7a) and the mixed substance from each other.

9. Arrangement in a cross-flow membrane separation unit according to claim 4, **characterized in that** the ejector pump element (10b) is placed between the cap (13) of the enclosure (2) and the membrane element (5).

10. Arrangement in a cross-flow membrane separation unit according to any of preceding claims 1-4, **characterized in that** the ejector pump element (10b) comprises a seal (9b) between the ejector pump element (10b) and the enclosure (2) inner surface, and that the seal (9b) is arranged to separate the channels for the circulatory concentrate (7a) and the input substance (3) from each other, and that the ejector pump element (10b) comprises a seal (9c) between the ejector pump element (10b) and the end cap (5a) of the membrane element (5), and that the seal (9c) is arranged to separate the channels for the circulatory concentrate (7a) and the mixed substance from each other.

11. Arrangement in a membrane separation unit according to any of preceding claims 1 - 10, **characterized in that** the separation is micro-, ultra- or nanofiltering, or reverse osmosis.

12. Arrangement in a membrane separation unit according to any of preceding claims 1 - 11, **characterized in that** the separated substance is water containing contaminants.

## Patentansprüche

1. Anordnung in einer Querstrom-Membrantrenneinheit (1), die ein Membranelement (5) und eine das Membranelement (5) umschließende Druckhaltestruktur umfasst, wobei in das Gehäuse (2) eine unter Druck stehende Eingangssubstanz (3) geleitet wird und aus dem Gehäuse (2) Ausgänge für die abgetrennten Teile der Eingangssubstanz (3) vorhanden sind, wobei die Eingangssubstanz (3) in einen stromaufwärtigen Abschnitt (5u) des Membranelements (5) geleitet wird, ein Teil der Eingangssubstanz (3) so angeordnet ist, dass er in der Membran als Permeat (6) permeiert, und der nicht permeierte Teil, ein Konzentrat (7), so angeordnet ist, dass er aus dem stromabwärtigen Abschnitt (5d) des Membranelements (5) austritt, und ein Teil des Konzentrats (7) so angeordnet ist, dass es als zirkulierendes Konzentrat (7a) innerhalb des Gehäuses (2) zum stromaufwärtigen Abschnitt (5u) des Membranelements (5) zurückzirkuliert, um mit der unter Druck stehenden Eingangssubstanz (3) vermischt zu werden, und wobei der Massenstrom in den stromaufwärtigen Abschnitt (5u) des Membranelements (5) größer ist als der Massenstrom in das Gehäuse (2), und dass die Trenneinheit (1) ein Saugstrahlpumpenelement (10a, 10b, 10c) mit einer oder mehreren Saugstrahlpumpen (4) umfasst, **dadurch gekennzeichnet, dass** die Trenneinheit (1) eine Dichtung (9b, 9c) umfasst, die so angeordnet ist, dass sie die Eingangssubstanz (3), die dem stromaufwärtigen Abschnitt (5u) des Membranelements (5) zugeführt wird, und Kanäle des zirkulierenden Konzentrats (7a) voneinander trennt.

2. Anordnung in einer Querstrom-Membrantrenneinheit nach Anspruch 1, **dadurch gekennzeichnet, dass** ein Teil des Konzentrats (7), das aus dem stromabwärtigen Abschnitt (5d) des Membranelements (5) freigesetzt wird, so angeordnet ist, dass es zwischen der Außenfläche des Membranelements (5) und der Innenfläche des Gehäuses (2) geleitet wird, um zurück zum stromaufwärtigen Abschnitt (5u) des Membranelements (5) zu zirkulieren.

3. Anordnung in einer Querstrom-Membrantrenneinheit nach Anspruch 1, **dadurch gekennzeichnet, dass** ein Teil des Konzentrats (7), der aus dem stromabwärtigen Abschnitt (5d) des Membranelements (5) freigesetzt wird, so angeordnet ist, dass er über einen Abflusskanal (7p) zurück zum stromaufwärtigen Abschnitt (5u) des Membranelements (5) geleitet wird.

4. Anordnung in einer Querstrom-Membrantrenneinheit nach einem der vorhergehenden Ansprüche 1 - 3, **dadurch gekennzeichnet, dass** das Saugstrahlpumpenelement (10a, 10b, 10c), das zur Aufrechterhaltung der Zirkulation angeordnet ist, eine oder mehrere Saugstrahlpumpen (4) umfasst, die jeweils eine Düse für die Eingangssubstanz (3), einen Kanal (11) für das zirkulierende Konzentrat (7a) und einen Diffusor (12) zum Mischen der Substanzen (3, 7a) umfassen.

5. Anordnung in einer Querstrom-Membrantrenneinheit nach Anspruch 4, **dadurch gekennzeichnet, dass** das Saugstrahlpumpenelement (10a) am Ende des Membranelements (5) angebracht ist.

6. Anordnung in einer Querstrom-Membrantrenneinheit nach einem der vorhergehenden Ansprüche 1 - 5, **dadurch gekennzeichnet, dass** das Saugstrahlpumpenelement (10a) eine Dichtung (9b) zwischen dem Saugstrahlpumpenelement (10a) und der Innenfläche des Gehäuses (2) aufweist.

7. Anordnung in einer Querstrom-Membrantrenneinheit nach einem der vorhergehenden Ansprüche 1 - 4, **dadurch gekennzeichnet, dass** das Saugstrahlpumpenelement (10c) in den Deckel (13) des Gehäuses (2) oder in das Ende des Gehäuses (2) integriert ist.

8. Anordnung in einer Querstrom-Membrantrenneinheit nach Anspruch 7, **dadurch gekennzeichnet, dass** das Saugstrahlpumpenelement (10c) eine Dichtung (9c) zwischen dem Saugstrahlpumpenelement (10c) und einer Endkappe (5a) des Membranelements (5) umfasst, und dass die Dichtung (9c) so angeordnet ist, dass sie die Kanäle für das zirkulierende Konzentrat (7a) und die gemischte Substanz voneinander trennt.

9. Anordnung in einer Querstrom-Membrantrenneinheit nach Anspruch 4, **dadurch gekennzeichnet, dass** das Saugstrahlpumpenelement (10b) zwischen dem Deckel (13) des Gehäuses (2) und dem Membranelement (5) angeordnet ist.

10. Anordnung in einer Querstrom-Membrantrenneinheit nach einem der vorhergehenden Ansprüche 1-4, **dadurch gekennzeichnet, dass** das Saugstrahlpumpenelement (10b) eine Dichtung (9b) zwischen dem Saugstrahlpumpenelement (10b) und der Innenfläche des Gehäuses (2) aufweist, und dass die Dichtung (9b) so angeordnet ist, dass sie die Kanäle für das zirkulierende Konzentrat (7a) und die Eingangssubstanz (3) voneinander trennt, und dass das Saugstrahlpumpenelement (10b) eine Dichtung (9c) zwischen dem Saugstrahlpumpenelement (10b) und der Endkappe (5a) des Membranelements (5) umfasst, und dass die Dichtung (9c) so angeordnet ist, dass sie die Kanäle für das zirkulierende Konzentrat (7a) und die gemischte Substanz voneinander trennt.

11. Anordnung in einer Membrantrenneinheit nach einem der vorhergehenden Ansprüche 1 - 10, **dadurch gekennzeichnet, dass** die Trennung eine Mikro-, Ultra- oder Nanofilterung oder eine Umkehrosmose ist.

12. Anordnung in einer Membrantrenneinheit nach einem der vorhergehenden Ansprüche 1 - 11, **dadurch gekennzeichnet, dass** die abgetrennte Substanz Wasser ist, das Verunreinigungen enthält.

## Revendications

1. Agencement dans une unité de séparation à membrane à écoulement transversal (1), comprenant un élément de membrane (5) et une structure de maintien de pression entourant l'élément de membrane (5), dans laquelle enceinte (2) une substance d'entrée sous pression (3) est introduite, hors de laquelle enceinte (2) se trouvent des sorties pour les parties séparées de la substance d'entrée (3), où la substance d'entrée (3) est introduite dans une section amont (5u) de l'élément de membrane (5), une partie de la substance d'entrée (3) est agencée pour imprégner la membrane sous la forme de perméat (6), et la partie non imprégnée, un concentré (7), est agencé pour sortir de la section aval (5d) de l'élément de membrane (5), et une partie du concentré (7) est agencée pour recirculer sous la forme de concentré circulatoire (7a) à l'intérieur de l'enceinte (2) vers la section amont (5u) de l'élément de membrane (5) afin d'être mélangée à la substance d'entrée sous pression (3), et où le débit massique dans la section amont (5u) de l'élément de membrane (5) est supérieur au débit massique dans l'enceinte (2), et où l'unité de séparation (1) comprend un élément de pompe à éjecteur (10a, 10b, 10c) avec une ou plusieurs pompes à éjecteur (4), **caractérisé en ce que** l'unité de séparation (1) comprend un joint (9b, 9c) qui est agencé pour séparer la substance d'entrée (3) qui est introduite dans la section amont (5u) de l'élément de membrane (5) et les canaux du concentré circulatoire (7a) l'un de l'autre.

2. Agencement dans une unité de séparation à membrane à écoulement transversal selon la revendication 1, **caractérisé en ce qu'**une partie du concentré (7) libéré de la section aval (5d) de l'élément de membrane (5) est agencée pour être introduite entre la surface extérieure de l'élément de membrane (5) et la surface intérieure de l'enceinte (2) pour recirculer vers la section amont (5u) de l'élément de membrane (5).

3. Agencement dans une unité de séparation à membrane à écoulement transversal selon la revendication 1, **caractérisé en ce qu'**une partie du concentré (7) qui est libéré de la section aval (5d) de l'élément de membrane (5) est agencée pour être introduite par l'intermédiaire d'un canal de décharge (7p) pour recirculer vers la section amont (5u) de l'élément de membrane (5).

4. Agencement dans une unité de séparation à membrane à écoulement transversal selon l'une quelconque des revendications précédentes 1 à 3, **caractérisé en ce que** l'élément de pompe à éjecteur (10a, 10b, 10c), qui est agencé pour maintenir la circulation, comprend une ou plusieurs pompes à éjecteur (4) comprenant chacune une buse pour la substance d'entrée (3), un canal (11) pour le concentré circulatoire (7a) et un diffuseur (12) pour mélanger les substances (3, 7a).

5. Agencement dans une unité de séparation à membrane à écoulement transversal selon la revendication 4, **caractérisé en ce que** l'élément de pompe à éjecteur (10a) est fixé à l'extrémité de l'élément de membrane (5).

6. Agencement dans une unité de séparation à membrane à écoulement transversal selon l'une quelconque des revendications précédentes 1 à 5, **caractérisé en ce que** l'élément de pompe à éjecteur (10a) comprend un joint (9b) entre l'élément de pompe à éjecteur (10a) et la surface intérieure de l'enceinte (2).

7. Agencement dans une unité de séparation à membrane à écoulement transversal selon l'une quelconque des revendications précédentes 1 à 4, **caractérisé en ce que** l'élément de pompe à éjecteur (10c) est intégré dans le capuchon (13) de l'enceinte (2) ou dans l'extrémité de l'enceinte (2).

8. Agencement dans une unité de séparation à membrane à écoulement transversal selon la revendication 7, **caractérisé en ce que** l'élément de pompe à éjecteur (10c) comprend un joint (9c) entre l'élément de pompe à éjecteur (10c) et un capuchon d'extrémité (5a) de l'élément de membrane (5), et que le joint (9c) est agencé pour séparer les canaux pour le concentré circulatoire (7a) et la substance mélangée l'un de l'autre.

9. Agencement dans une unité de séparation à membrane à écoulement transversal selon la revendication 4, **caractérisé en ce que** l'élément de pompe à éjecteur (10b) est placé entre le capuchon (13) de l'enceinte (2) et l'élément de membrane (5) .

10. Agencement dans une unité de séparation à membrane à écoulement transversal selon l'une quelconque des revendications précédentes 1 à 4, **caractérisé en ce que** l'élément de pompe à éjecteur (10b) comprend un joint (9b) entre l'élément de pompe à éjecteur (10b) et la surface intérieure de l'enceinte (2), et que le joint (9b) est agencé pour séparer les canaux pour le concentré circulatoire (7a) et la substance d'entrée (3) l'un de l'autre, et que l'élément de pompe à éjecteur (10b) comprend un joint (9c) entre l'élément de pompe à éjecteur (10b) et le capuchon d'extrémité (5a) de l'élément de membrane (5), et que le joint (9c) est agencé pour séparer les canaux du concentré circulatoire (7a) et la substance mélangée l'un de l'autre.

11. Agencement dans une unité de séparation à membrane à écoulement transversal selon l'une quelconque des revendications précédentes 1 à 10, **caractérisé en ce que** la séparation est un micro, ultra ou nanofiltrage, ou une osmose inverse.

12. Agencement dans une unité de séparation à membrane à écoulement transversal selon l'une quelconque des revendications précédentes 1 à 11, **caractérisé en ce que** la substance séparée est de l'eau contenant des contaminants.
